# EUROPÄISCHE PATENTSCHRIFT

(11) **EP 1 519 969 B1**
(45) Veröffentlichungstag und Bekanntmachung des Hinweises auf die Patenterteilung: **29.11.2006**
(21) Anmeldenummer: 03732574.3
(22) Anmeldetag: 14.06.2003
(51) Int. Cl.: C08F 220/06, C02F 1/56, C14C 9/00

(54) **COPOLYMERISATE ZUR VERMEIDUNG VON ABLAGERUNGEN IN WASSERFUHRENDEN SYSTEMEN, DEREN HERSTELLUNG UND VERWENDUNG**
COPOLYMERS FOR AVOIDING DEPOSITS IN WATER SUPPLY SYSTEMS, PRODUCTION AND USE THEREOF
COPOLYMERES POUR PREVENIR LES DEPOTS DANS DES SYSTEMES D'ACHEMINEMENT D'EAU, LEUR PREPARATION ET LEUR UTILISATION

(30) Priorität: 26.06.2002 DE 10228628
(43) Veröffentlichungstag der Anmeldung: 06.04.2005
(73) Patentinhaber: Ashland Licensing and Intellectual Property LLC, Dublin, OH 43017 (US)
(72) Erfinder: ISSBERNER, Jörg, 47877 Willich-Neersen (DE); PÖSCHMANN, Rainer, 47918 Tönisvorst (DE); FLOCKEN, Christian, 47839Krefeld (DE)
(74) Vertreter: Bülle, Jan
(86) Internationale Anmeldenummer: PCT/EP2003/006291
(87) Internationale Veröffentlichungsnummer: WO 2004/003040

(56) Entgegenhaltungen:
- EP-A- 0 219 043
- EP-A- 1 209 198
- CHEMICAL ABSTRACTS, vol. 110, no. 8, 17. April 1989 (1989-04-17) Columbus, Ohio, US; abstract no. 135940, "PRODUCING A COPOLYMER OF METHACRYLIC ACID WITH TERPENES" XP000180101 & SU 1 435 580 A (BELORUSSIAN POLYTECHNIC INSTITUTE) 7. November 1988 (1988-11-07)

## Beschreibung

Die Erfindung betrifft Copolymerisate aus monoethylenisch ungesättigten säuregruppentragenden Monomeren und einer weiteren hydrophoben Monomerkomponente zur Vorbeugung von anorganischen und organischen Ablagerungen in wasserführenden Systemen, sowie ein Verfahren zu deren Herstellung.

Wasserführende Systeme wie Wasser- und Abwasserleitungssysteme, Kühl- oder Heizkreisläufe, Kühlschmiermittelsysteme, Bohrspülungen oder Produktionsprozeßwässer zum Stofftransport enthalten eine Vielzahl von Mikroorganismen wie beispielsweise Bakterien der Art Pseudomonas vesicularis, Enterobacter cloacae, Citrobacter freundii und Enterobacter amnigenus, die wegen der in diesen Systemen anzutreffenden Bedingungen ein schnelles Wachstum aufweisen. Durch die Vermehrung und den Stoffwechsel der Mikroorganismen kann es daher zur Bildung von biologischen Massen, den sogenannten extrazellulären polymeren Substanzen in diesen Medien kommen, die oftmals mit anorganischen polyvalenten Kationen Gele ergeben und an Anlagenteilen haften.

Die Ablagerungen können in Rohrleitungen zu einem deutlichen Druckverlust führen, der überproportional zur entstehenden Querschnittsverengung ist. Weiterhin können diese Ablagerungen die Korrosion von Anlagenteilen beschleunigen, da in den Gelen lokal die Konzentration an Sauerstoff, das Redoxpotential, der Salzgehalt und damit die Leitfähigkeit zu der übrigen Umgebung unterschiedlich ist. Bilden sich aus derartigen Ablagerungen größere Gebilde, besteht die Gefahr, dass diese abgelöst werden und zu Störungen in Aggregaten und Produktionsmassen führen.

In Kühlkreisläufen stellen die Ablagerungen eine Isolierschicht dar, die den Wirkungsgrad des Wärmeübergangs stark verringern können, da am Ort der Ablagerung statt konvektiver ein diffusiver Wärmübergang stattfindet. Es sei darauf hingewiesen, dass organische Beläge eine deutlich stärkere Isolierwirkung ergeben als anorganische Beläge.

Von besonderer Bedeutung sind Mischungen aus organischen und anorganischen Belägen, da organische Beläge gute Wachstums- und Lebensbedingungen in den oberflächenreichen anorganischen Belägen vorfinden.

Insbesondere bei der Papierherstellung müssen diese biologischen Wachstumsvorgänge im Produktionsprozess verhindert werden, wozu zur Zeit Mikrobizide (Biozide, Slimicides) auf der Basis intensiv wirkender, toxischer Stoffe eingesetzt werden.

Neben den Problemen, die mit der sicheren Handhabung und dem Transport solcher toxischen Stoffe verbunden sind, und der Beschränkung der Wirkung auf den gewünschten Einsatzbereich ist es notwendig, mehrere dieser Mikrobizide in Kombination und im Wechsel nacheinander einzusetzen, um der Resistenz der Mikroorganismen gegen das gerade eingesetzte Produkt zu begegnen. Zudem bedeutet die Abtötung von Mikroorganismen nicht gleichzeitig, dass diese aus dem System entfernt wurden. Oftmals bleibt tote Biomasse zurück, die für nachfolgende Mikroorganismen eine Nahrungsquelle darstellt. Die Ablagerungen sind gleichzeitig eine Barriere gegenüber Bioziden und können diese effektiv vor dem Eindringen schützen. Daher ist es entscheidend, derartige Gele und Ablagerungen aus dem System zu entfernen.

In der WO 95/15296 werden Öl-in-Wasser-Emulsionen beschrieben, welche die Schleimbildung in wasserführenden Systemen verhindern. Die aufgeführten Öl-in-Wasser-Emulsionen bestehen aus einer hydrophoben Phase (Ölphase), mindestens einem Emulgator und Wasser und in deren hydrophober Phase ein Wirkstoff enthalten ist, der ein acyclisches, monocyclisches und/oder bicyclisches Terpen, insbesondere ein Terpenkohlenwasserstoff sein kann. Nachteilig ist, dass nur organische Beläge vermieden werden können und dass es sich um eine Emulsion handelt. Dem Fachmann ist bekannt, dass Emulsionen je nach Handhabung, Lagertemperatur und Lagerdauer dazu neigen zu separieren, wodurch die Wirkung verloren geht.

Neben den organischen Ablagerungen durch mikrobielle Prozesse gibt es in den wasserführenden Systemen bei der Papierherstellung, insbesondere bei der Verarbeitung von Altpapier und Recyclingpapier Ablagerungen bestehend aus Harzen und Klebstoffresten. Diese Ablagerungen können auch dann auftreten, wenn das System keine Mikroorganismen beinhaltet. Die negativen Auswirkungen auf die Anlagenteile und den gesamten Prozess sind analog den oben beschriebenen.

In der US 5,863,385 wird die Verwendung von Öl-in-Wasser-Emulsionen entsprechend der WO 95/15296 zur Behandlung von Maschinen zur Zellstoff-, Papier- und Kartonherstellung zur Reinigung dieser Aggregate von anhaftenden Verunreinigungen aus natürlichen Harzen und/oder synthetischen Polymerisaten sowie die Verhinderung der Verschmutzung dieser Aggregate durch solche Verunreinigungen beschrieben.

US 5,916,857 beschreibt die Entfernung von klebrigen Harzrückständen an Papiermaschinen durch Reinigungsmittel bestehend aus einer Mischung von aliphatischen Petroleumdestillaten, d-Limonen und aliphatischen Dicarbonsäureestem.

Neben den eben beschriebenen Ablagerungen organischer Herkunft und Zusammensetzung kann es in wasserführenden Systemen zu anorganischen Ablagerungen kommen, die aus Salzen und Verbindungen des für die benutzen Prozesse verwendeten Wassers gebildet werden. Insbesondere sind hierbei die Chloride, Sulfate, Phosphate und Hydrogencarbonate der Erdalkalien zu nennen. Ein Teil dieser Kationen und Anionen kann unlösliche Salze oder Oxide/Hydroxide bilden, die bei Überschreitung des jeweiligen Löslichkeitsproduktes ausfallen. Insbesondere die löslichen Hydrogencarbonate werden in der Hitze in Carbonate umgewandelt, wobei bei erhöhter Temperatur ein Teil der Calcium-Salze als schwerlösliches Calciumcarbonat ausfällt. Bei hohen Magnesium-Konzentrationen können auch Magnesiumcarbonate oder bei entsprechendem pH-Wert auch Hydroxide ausfallen. Ein bekanntes Belagsproblem in Abwasseranlagen ist auch die Bildung von Magnesium-Ammonium-Phosphat. Weitere mögliche Ablagerungen bestehen aus Calciumsulfat, Silikaten und Phosphaten in verschiedensten Formen, welche entsprechend der Systembedingungen wie zum Beispiel pH-Wert, Temperatur und Grad der Übersättigung zur Belagsbildung neigen.

Im Bereich der Papierherstellung sind Beläge aus Calciumoxalat besonders hervorzuheben, da Oxalsäure im Holz vorkommt und während des Bleichprozesses durch oxidativen Abbau von Lignin und von Mono-, Oligo- oder Polysacchariden, wie z.B. Xylan gebildet wird.

Substanzen, die das Ausfallen von schwerlöslichen Verbindungen verhindern, sind dem Fachmann lange als sogenannte Härtestabilisatoren bekannt. Beispielsweise sind zu nennen: anorganische Polyphosphate, Ligninsulfonate, Naphthalinsulfosäure-Kondensationsprodukte, Phosphonsäuren, Aminomethylenphosphonsäuren, Phosphorsäureester, Phosphonocarbonsäuren sowie Polycarbonsäuren, beispielsweise vom Typ der teilverseiften Polyacrylamide oder der Polymere bzw. Copolymere von Acrylsäure. Nachteilig bei den genannten Substanzen ist, dass einige dieser Komplexbildner toxisch sind und nur anorganische Ablagerungen vermieden werden können.

Neben Belägen aus gerade entstandenen unlöslichen anorganischen Verbindungen können auch bereits im Kühlsystem vorhandene unlösliche Teilchen zu Belägen führen. Diese zweite große Gruppe der anorganischen Belagsbildner sind suspendierte Feststoffe, welche aus dem System resultieren oder durch die Luft bei offenen Kühlsystemen in das System eingetragen werden. Die suspendierten Feststoffe sedimentieren an Stellen mit sehr geringen Strömungsgeschwindigkeiten im System. Der so entstehende Belag kann aus Korrosionsprodukten der Werkstoffe, eingewaschenen Stäuben und Feststoffen aus dem Zusatzwasser resultieren. Weiterhin können sich auch Ablagerungsgemische bilden, welche aus Sedimenten und Härteausfällungen bestehen.

Seit langem sind meist aus der Gruppe der Polymere Produkte bekannt, die die Funktion von Dispergiermitteln übernehmen, d.h. sie stabilisieren mikrodispers verteilte Feststoffpartikel gegen Sedimentation und Schlammbildung. Hier werden Polycarbonsäuren beispielsweise vom Typ der teilverseiften Polyacrylamide oder der Polymere bzw. Copolymere von Acrylsäure mit verschiedenen Comonomeren sowie Polystyrolsulfonate, Polyvinylsulfonate, quartäre Ammoniumverbindungen unverseifte Polyacrylamide und Polyalkylengkykole eingesetzt. Der Stand der Technik wird u.a. in folgenden Schriften offenbart:
EP 818423 A1, US 4455235, GB 2105319, GB 2152919.
Nachteilig ist, dass nur anorganische Ablagerungen wirkungsvoll vermieden werden können.

Dem Fachmann ist bekannt, dass in wasserführenden Systemen die chemische Natur der Ablagerungen oft nicht exakt bekannt ist und durch jahreszeitliche klimatische Veränderungen schwankt. Durch die temperaturbedingte Konzentrationsschwankungen der gelösten Gase variiert gleichzeitig der Gehalt an löslichen Härtebildnern. Auch die Konzentration von Mikroorganismen ist klimatisch bedingt jahreszeitlichen Schwankungen unterworfen. So kann es sein, dass in einer Produktionsanlage jahreszeitlich bedingt unterschiedliche Ablagerungen vermieden werden müssen, das heißt unterschiedliche Maßnahmen getroffen werden müssen. In den Perioden der Wetterumstellung Winter-Sommer und umgekehrt ist dies besonders kritisch.

Es hat daher auch nicht an Versuchen gefehlt, Ablagerungen gleichzeitig durch den Einsatz von Polymeren und Bioziden zu unterdrücken, wie in EP 892838 B1 oder WO 96/14092 beschrieben. Nachteilig ist auch bei dieser Methode die Handhabung von giftigen oder gefährlichen Bioziden.

In der US 5756624 werden Terpen-Terpolymere bestehend aus mindestens 10% Terpen und aus weiteren Monomeren aus der Gruppe der olefinisch ungesättigten Monocarbonsäuren mit 3 bis 5 Kohlenstoffatomen und deren Estern, erhalten durch das Verfahren der Massepolymerisation, beschrieben. Nachteilig ist, dass bei der beschriebenen Polymerisation ohne Lösungsmittel u.a. hohe Temperaturen erreicht werden, wodurch eine unerwünschte Färbung des Produktes eintritt. Ferner sind die so erhaltenen Polymere nicht wasserlöslich, allenfalls dispergierbar. Es wird die Verwendung u.a. als Klebrigmacher für Klebstoffe und als Builder vorgeschlagen.

Gleiches gilt auch für die DE 43 32 806 A1, in der die vorgenannten Verwendungen ebenfalls aufgeführt sind. Diese Druckschrift beschreibt Copolymere aus Terpenen ohne konjugierte Doppelbindungen und Vinylverbindungen und/oder Dicarbonsäuren mit einer C-C-Doppelbindung sowie deren Derivate als Comonomere, die vorzugsweise mittels einer radikalischen Massepolymerisation erhalten werden. Obgleich organische Flüssigkeiten, die die Eigenschaft besitzen, das Terpen-Copolymere oder die Comonomeren bzw. Monomeren bei Raumtemperatur zu lösen, als organische Lösungsmittel genannt werden, wird in dieser Druckschrift völlig auf die radikalische Massenpolymeristion als Herstellungsverfahren der dort beschriebenen Terpen-Copolymere abgestellt. Eine Herstellungsweise dieser Terpen-Copolymere mittels radikalischer Lösungspolymerisation in wässriger Phase wird nicht beschrieben. Vielmehr werden allgemein kationische und auch radikalische Lösungspolymerisationen als nachteilig dargestellt.

Lediglich in Wasser dispergierbare, nicht wasserlösliche Terpene enthaltende Copolymerisatdispersionen werden in der DE 35 36 931 A1 beschrieben. Maßgebliche Eigenschaft dieser dort genannten Copolymerisate ist ihre Eignung zur Verwendung in Bindemitteldispersionen, insbesondere für industrielle Beschichtungen, bei denen es auf eine geringe Wasseraufnahme bzw. Wasserquellung ankommt und mit häufiger oder längerer Wasserbelastung der Beschichtungen zu rechnen ist. Eine Verwendung dieser Terpene enthaltenden Copolymerisatdispersionen zur Vorbeugung von anorganischen und organischen Ablagerungen in wasserführenden Systemen wie z.B. in Brauch- oder Abwassersystemen, in Kühlkreisläufen, in Meerwasserentsalzungsanlagen, in Umkehrosmoseanlagen, zur Aufarbeitung von Brackwasser, bei der Zuckergewinnung aus Zuckerrüben etc. ist aufgrund des vorgenannten Eigenschaftsprofil dieser Copolymerisate nicht möglich.

Radikalische Copolymerisationen von Terpenen mit Maleinsäureanhydrid sind auch in Eur. Polym. J., 24 (5), 453-6, 1988 beschrieben worden. Diese Reaktionen werden als Lösungspolymerisierungen, z.B. im Tetrahydrofuran Benzol, im Dioxan oder im Toluol durchgeführt. Diese teils giftigen und krebserzeugenden Lösungsmittel müssen anschließend mit beträchtlichem Aufwand entsorgt werden. Massenpolymerisierung wird nicht beschrieben.

Aufgabe der Erfindung war es daher, zur Vorbeugung der Ablagerungsbildung in wasserführenden Systemen Stoffe bzw. Zusammensetzungen und Verfahren zu deren Herstellung bereitzustellen, die gegenüber den bekannten bisher eingesetzten Mitteln keine Toxizität aufweisen, leicht aus einfach zugänglichen Komponenten herstellbar sind und über längere Zeiten ohne Funktionsverlust lagerbar sind. Aufgrund der Anwendung in wasserführenden Systemen sollte die Löslichkeit in Wasser gegeben sein. Die Wirksamkeit soll sowohl gegen anorganische als auch organische Ablagerungen und insbesondere auch gegen Kombinationen aus beiden Ablagerungen wirksam sein. Ferner sollte eine zuverlässige Verhinderung der Sedimentation von Feststoffen unter den gegebenen Systembedingungen zuverlässig erreicht werden. Neben dieser stabilisierenden und dispergierenden Wirkung sollten die Stoffe bzw. Zusammensetzungenen ihre Wirksamkeit gleichmäßig und unabhängig von jahreszeitlichen Temperaturschwankungen erfüllen.

Die Aufgabe wurde erfindungsgemäß gelöst durch die Bereitstellung wasserlöslicher Copolymerisate aus
a) monoethylenisch ungesättigten, säuregruppentragenden Monomeren und
b) mindestens einer der folgenden, eine ungesättigte Doppelbindung enthaltenden copolymerisierbaren hydrophoben Komponenten
   b1) ein acyclisches, monocyclisches und/oder bicyclisches Terpen, insbesondere ein Terpenkohlenwasserstoff
   b2) ein ungesättigter, offenkettiger oder zyklischer, normaler oder isomerer Kohlenwasserstoff mit 8 bis 30 Kohlenstoffatomen
   b3) ein ungesättigter Fettalkohol mit 8 bis 30 Kohlenstoffatomen, und ggf.
c) bis zu 40 Gew.% Säuregruppenfreie, wasserlösliche monomere
dadurch gekennzeichnet, dass die Copolymerisate durch radikalische Copolymerisation der Komponenten a) und b) in wässriger Phase gebildet werden.

Die erfindungsgemäßen Copolymerisate sind, im Vergleich zu den Produkten des Standes der Technik überraschend gut wasserlöslich, die Lösungen sind farblos und klar, Sie können nicht nur die Bildung von sowohl anorganischen als auch organischen Belägen verhindern, sondern weisen auch ein deutlich verbessertes Eigenschaftsniveau gegenüber den reinen Polyacrylaten bei der Verhinderung anorganischer Beläge auf. Insbesondere sind die Produkte auch zur Verhinderung gemischt organisch/anorganischer Beläge geeignet.

Darüber hinaus sind die beschriebenen Produkte auch zum Einsatz gegen Mikroorganismen in wässrigen Systemen wie beispielsweise bei der Zuckerherstellung aus Zuckerrüben oder wässrigen Kreisläufen der Papierherstellung oder in Kläranlagen hervorragend geeignet.

Erfindungsgemäß einzusetzende, säuregruppentragende, ungesättigte Monomere a) sind Monocarbonsäuren wie beispielsweise Acrylsäure, Methacrylsäure, Crotonsäure, Isocrotonsäure, Vinylessigsäure, Maleinsäurehalbester, Maleinsäurehalbamide, Dicarbonsäuren wie beispielsweise Maleinsäure, Fumarsäure, Itaconsäure, Sulfonsäuren wie beispielsweise Vinylsulfonsäure, Allylsulfonsäure, (Meth)allylsulfonsäure, 2-Acrylamido-2-methyl-1-propansulfonsäure, sowie deren Alkali- und/oder Ammoniumsalze. Bevorzugt werden die Monocarbonsäuren aus der Gruppe Acrylsäure, Methacrylsäure und die Sulfonsäuren aus der Gruppe Vinylsulfonsäure, (Meth)allylsulfonsäure und 2-Acrylamido-2-methyl-1-propansulfonsäure ausgewählt.

Besonders bevorzugt sind von den Monocarbonsäuren Acrylsäure sowie deren Alkali- und/oder Ammoniumsalze und deren Gemische. In einer weiteren, bevorzugten Ausführungsform werden Monocarbonsäure und Sulfonsäuregruppen enthaltende Monomere sowie deren Alkali- und/oder Ammoniumsalze zusammen eingesetzt, wobei der Anteil der sulfonsäuregruppenhaltigen Monomere 0,1 bis 40 Gew.%, vorzugsweise 1 bis 25 Gew.% beträgt.

Die Säuregruppen in den erfindungsgemäßen Copolymerisaten sind im Allgemeinen zu 1 bis 75 %, bevorzugt zu 2 bis 50 % und besonders bevorzugt zu 5 bis 30 % neutralisiert. Sie liegen bevorzugt als Alkali- oder Ammoniumsalze vor.

Beispielhaft sind als hydrophobe Komponenten b) für b1) zu nennen:
Natürliche und synthetische Terpene, beispielsweise Pinene wie alpha-Pinen und beta-Pinen, Terpinolen, Limonen (Dipentene), beta-Terpinen, gamma-Terpinen, alpha.-Thujene, Sabinene, delta.-.sup.3 - carene, Camphen, beta-Cadinen, beta.-Caryophyllene, Cedrene, Bisalbone wie alpha.-Bisalbone, beta.-Bisalbone, gamma-Bisalbone, Zingiberene, Humulen, (alpha.-Caryophyl-1ene), alpha-Zitronellol, Linalool, Geraniol, Nerol, lpsenol, alpha-Terpineol, D-Terpineol-(4), Dihydrocarveol, Nerolidol, Farnesol, alpha.-Eudesmol, beta-Eudesmol, Zitral-, D-Citronellal, Carvon, D-Pulegone, Piperitone, Carvenone, Bisabolene, beta-Selinene, alpha-Santalene, Vitamin A, Abetinsäure und Mischungen dieser Mittel, sowie Extrakte aus natürlichen Vorkommen wie beispielsweise Orangenterpen. Von Terpenen werden bevorzugt: Pinene, Nerol, Citral- und Citronellal, Camphen, Limonen/Dipentene und Linalool. Besonders bevorzugt werden Limonen/Dipentene und Pinene.

Als ungesättigte Kohlenwasserstoffe b2) sind beispielhaft zu nennen:
einfach ungesättigte lineare n-Alkene bzw. Monoolefine, verzweigte Isoalkene sowie Cycloalkene, alle vorgenannten Verbindungen mit 8 bis 30 Kohlenstoffatomen, insbesondere n-Alkene mit endständiger Doppelbindung (α-Olefine) wie z.B. 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1-Octadecen, 1-Eikosen, 1-Triakonten sowie alle vorgenannten Alkene/Olefine mit innenständiger Doppelbindung.

Als besonders bevorzugte copolymerisierbare Komponente b) werden ein acyclisches Terpen und/oder ein monocyclischer und/oder bicyclischer Terpenkohlenwasserstoff verwendet.

Der Anteil der Komponente b) im Copolymerisat liegt im allgemeinen bei 0,001 bis 50 Gew.%, bevorzugt bei 0,01 bis 30 Gew.% und besonders bevorzugt 0,2 bis < 20 Gew.%.

Zur weiteren Modifizierung der Polymereigenschaften können optional neben den oben genannten Monomeren bis zu 40 Gew.% weitere, im wässrigen Polymerisationsansatz lösliche Comonomere c) wie beispielsweise Acrylamid, Methacrylamid, Acrylnitril, (Meth)allyl-alkoholethoxylate und die Mono(Meth)acrylsäureester von Alkoholen oder Ethoxylaten wie beispielsweise Hydroxyethyl(meth)acrylat, Hydroxypropyl(meth)acrylat, Methoxypolyethylenglycol(meth)acrylat, verwendet werden. Als weitere geeignete Monomere seien beispielweise genannt:
N,N-Dimethylaminoethyl(meth)acrylat, N,N-Dimethylaminopropyl(meth)acrylat, N,N-Dimethylaminoethyl(meth)acrylamid und N,N-Dimethylaminopropyl(meth)acrylamid, wobei N,N-Dimethylaminoethylacrylat und N,N-Dimethylaminopropylaaylamid. bevorzugt Verwendung finden. Auch Monomere entsprechend der folgenden Formel sind erfindungsgemäß als Komponente c) einsetzbar:

H2C=CR1-CO-X-R2-N(R3)3Y-

in der
- R1 =: H, CH3
- R2 =: C2 - C4-Alkylengruppe
- R3 =: H, C1 - C4-Alkylguppe
- X =: O, NH
- Y =: Cl, SO4,

Durch Hydrolysereaktionen können aus diesen weiteren Comonomeren nach der Polymerisation gegebenenfalls Säuregruppen gebildet werden.

Die gewichtsmittleren Molekulargewichte Mw der erfindungsgemäßen Copolymerisate liegen in einem Bereich kleiner oder gleich 500.000 g/mol, bevorzugt kleiner oder gleich 100.000 g/mol und besonders bevorzugt zwischen 1.000 und 10.000 g/mol.

Gegenstand der Erfindung ist weiterhin auch ein Verfahren zur Herstellung der erfindungsgemäßen Polymerisate, dass dadurch gekennzeichnet ist, dass die Herstellung der wasserlöslichen Copolymeren durch radikalische Polymerisation der Monomerkomponenten in wässriger Phase erfolgt.

Die Konzentration der Monomeren im wässrigen Polymerisationsansatz beträgt üblicherweise 10 bis 70 Gew.%, vorzugsweise 20 bis 60 Gew.%.

Die sauren Monomerbestandteile a) können vor der Polymerisation teil oder voll neutralisiert werden, wobei vorzugsweise 1 bis 50%, besonders bevorzugt 5 bis 20% der Monomere a) neutralisiert werden. Zur Neutralisation werden bevorzugt solche Basen eingesetzt, die keinen negativen Einfluss auf die spätere Polymerisation haben. Bevorzugt wird Natron- und/oder Kalilauge und oder Ammoniak, besonders bevorzugt Natronlauge, eingesetzt. Prinzipiell können aber auch andere Basen, wie etwa aliphatische Amine oder aliphatische Aminoalkohole Verwendung finden.

In einer weiteren Ausführungsform werden die sauren Monomere vor der Polymerisation nicht neutralisiert. Falls gewünscht kann die Neutralisation dann nach der Polymerisationsreaktion erfolgen.

Die Monomerbestandteile b) werden in einer bevorzugten Ausführungsform des Verfahrens als Öl-in-Wasser-Emulsion dem Polymerisationsansatz zugeführt. Der Anteil der Ölphase in der Öl-in-Wasser-Emulsion beträgt 1 bis 90 Gew.-%, vorzugsweise 1 bis 50 Gew.-% und besonders bevorzugt 5 bis 30 Gew.-% der Gesamtemulsion. Die Herstellung der erfindungsgemäß zu verwendenden Emulsionen, insbesondere stabiler Öl-in-Wasser-Emulsionen ist bekannt, z.B. aus der WO 95/15296. Hierzu wird die Ölkomponente in Wasser mittels geeigneter bekannter Öl-in-Wasser-Emulgatoren emulgiert. Die Auswahl der Emulgatoren erfolgt nach den für den Fachmann bekannten Kriterien.

Für die Polymerisation der erfindungsgemäßen Copolymere in wässriger Phase kommen mehrere Verfahren in Frage, z.B. Lösungspolymerisation, inverse Emulsionspolymerisation und inverse Suspensionspolymerisation. Bevorzugt wird die Lösungspolymerisation durchgeführt. Die Lösungspolymerisation kann in kontinuierlicher oder diskontinuierlicher Weise erfolgen.

Die Monomerlösung wird vor dem Start der Polymerisation bei der adiabatischen Lösungspolymerisation auf eine Temperatur von unter 30°C, bevorzugt unter 20°C heruntergekühlt.

Die Polymerisation kann durch verschiedene Bedingungen initiiert werden, wie z.B. durch Bestrahlung mit radioaktiven, elektromagnetischen oder ultravioletten Strahlen oder durch Redoxreaktion zweier Verbindungen, wie z.B. Natriumhydrogensulfit mit Kaliumpersulfat oder Ascorbinsäure mit Wasserstoffperoxid. Auch der thermisch ausgelöste Zerfall eines sogenannten Radikalstarters wie beispielsweise Azobisisobutyronitril, Natriumperoxidisulfat, t-Butylhydroperoxid oder Dibenzoylperoxid ist als Polymerisationsstart einsetzbar. Ferner ist die Kombination von mehreren der vorgenannten Methoden möglich. Bevorzugt werden wasserlösliche Initiatorkomponenten eingesetzt.

Dem Stand der Technik ist hierzu ein breites Spektrum an Variationsmöglichkeiten hinsichtlich der Konzentrationsverhältnisse, Temperaturen, Art und Menge der Initiatoren als auch der Nachkatalysatoren zu entnehmen.

Zur Einstellung des gewünschten Molekulargewichtes der Polymerisate kann es erforderlich sein, in Gegenwart von Molekulargewichtsreglern, d.h. üblichen kettenabrechenden Substanzen, zu polymerisieren. Geeignete Molekulargewichtsregler umfassen beispielsweise Aldehyde wie Formaldehyd, Acetaldehyd, Propionaldehyd, n-Butyraldehyd, Isobutyraldehyd, Ameisensäure, Ammoniumformiat, Hydroxylamin sowie dessen Sulfat, Chlorid oder Phosphat; SH-Gruppen enthaltene Verbindungen wie Thioglykolsäure, Mercaptopropionsäure, Mercaptoethanol, Mercaptopropanol, Mercaptobutanol, Mercaptohexanol, Thiomaleinsäure, Thiophenol, 4-tert.-Butylthiophenol, n-Dodecalmercaptan und/oder tert.-Dodecylmercaptan. Weitere Beispiele für Polymerisationsregler sind Allylalkohol, Butenol, Isopropanol, n-Butanol, Isobutanol, Glykol, Glycerin, Pentaerythtrit, hypophosphorige Säure und deren Salze, wie z.B. Natriumhypophosphit. Die Polymerisationsregler werden sofern ihr Einsatz erforderlich ist, in Mengen bis 30 Gew.-%, bezogen auf die Monomeren, eingesetzt. Vorzugsweise polymerisiert man in Gegenwart von 0,5 bis 15 Gew.-% eines SH-Gruppen enthaltenen Polymerisationsreglers, bezogen auf die Monomeren.

Die Zugabe der Monomerkomponenten in den Polymerisationsansatz kann in der Weise erfolgen, dass entweder alle Monomere vorgelegt werden oder aber getrennt oder gemischt völlig oder teilweise dosiert werden. Die Wahl des geeigneten Verfahrens richtet sich u.a. nach der Konzentration der Monomere im Polymerisationsansatz, der Größe des Polymerisationsansatzes und der Geschwindigkeit, mit der die Komponente b) in das Copolymer eingebaut wird.

Es kann für die Einpolymerisation der Komponente b) von Vorteil sein, wenn dem Polymerisationsansatz Emulgatoren zugesetzt werden.

Der pH-Wert der nach dem erfindungsgemäßen Verfahren entstehenden Polymerlösungen wird mit geeigneten Basen wie z.B. Natronlauge, Kalilauge eingestellt zwischen 1 bis 10, bevorzugt 3 bis 7 und besonders bevorzugt zwischen 2,5 und 3,5.

Die erfindungsgemäße Copolymerisation in wässriger Phase verläuft in einfacher und problemloser Weise und führt zu klaren Lösungen, die direkt ohne Isolierung des Polymers verwendet werden können. Im Gegensatz dazu werden in den im Stand der Technik beschriebenen aufwendigen Verfahren der Polymerisation in umweltbelastenden organischen Lösemitteln bzw. in Massepolymerisationsverfahren Copolymere erzeugt, die stark verfärbt, nicht löslich und allenfalls in Wasser dispergierbar sind.

### Verwendung der erfindungsgemäßen Copolymerisate

Die erfindungsgemäßen copolymerisate werden in Brauch- oder Abwassersystemen, in Kühlkreisläufen in Meer wasserentsalzungsanlagen, in Umkehrosmoseanlagen und zur Aufarbeitung von Brackwasser eingesetzt.

Die erfindungsgemäß zu verwendenden Copolymerisate bzw. Copolymerisatlösungen werden als solche oder in Verdünnung mit Wasser oder Wasser und/oder lösungsmittelhaltigen Mischungen eingesetzt. Die Zugabe des Copolymers in das wasserführende System kann beliebig gewählt werden, vorzugsweise erfolgt die ein- oder mehrfache oder kontinuierliche Zugabe an den Punkten, wo eine hohe Belastung durch Mikroben oder deren Stoffwechselprodukte eintritt. Eine hohe Mikrobenbelastung tritt beispielsweise bei der Papiefierstellung, bei Stoffzuflüssen aus Altpapieranteilen oder anderen Recycling-Materialien auf.

In Kühlsystemen erfolgt die Zugabe entweder zum System direkt oder zum Zusatzwasser. Der Einsatz findet in offenen und geschlossenen Kühlkreisläufen bei unterschiedlichen Eindickungszahlen, speziell zwischen 1 und 15, wobei die Temperaturen je nach Klimabedingungen und Verfahren zwischen 5 und 250 °C liegen statt. Der pH -Bereich in diesen Anwendungen beträgt ca. 4 bis 12, die Zugabemenge an den erfindungsgemäßen Copolymeren beträgt 0,1 bis 5000 ppm, vorzugsweise 0,5 bis 1000 ppm und besonders bevorzugt von 1 bis 100 ppm, bezogen auf das wasserführende System.

Werden die erfindungsgemäßen Copolymerisate im Bereich der Papierherstellung eingesetzt, ist der Gehalt der Komponente b) bevorzugt >10%, für Anwendungen im Bereich Kühlwasser liegt er bei <10%, bevorzugt < 5% und besonders bevorzugt < 1%.

Ein weiteres Einsatzgebiet derartiger Substanzen ist die Dispergierung und Mahlung der verschiedensten anorganischen Pigmente für die Papierindustrie und die Keramikindustrie, die Baustoffindustrie (z.B. farbiger Beton) und die chemische Industrie. Auch in der Farbstoffherstellung werden Dispergatoren für eine Vielzahl von Produkten verwendet.

So werden etwa 0,1 bis 5 Gew.% Dispergiermittel, bezogen auf das Pigment, zur Dispergierung und Mahlung eingesetzt; beispielsweise bei der Dispergierung von Kaolin oder CaCO₃, wobei die pH-Werte zwischen 6 und10 liegen und sogenannte Slurries mit 50 bis 80 Gew.% Pigmentgehalt hergestellt werden. Die Slurries weisen einen Viskositätsbereich auf, der bevorzugt zwischen 200 bis 1500 mPa s liegt.

Bei der Farbstoff-Mahlung/Dispergierung werden deutlich höhere Dispergatormengen benötigt. So werden bei Dispersionsfarbstoffen 10 bis 50 % Dispergator, bezogen auf den Farbstoffanteil, eingesetzt. Mit den erfindungsgemäßen Copolymeren wird eine Viskosität erreicht, die das Pumpen der Slurries im Sprühtrocknungsprozeß erleichtert.

Ein weiteres Einsatzgebiet der Produkte ist die Verhinderung von Belägen in kommunalen und industriellen Kläranlagen. Der pH - Wert in diesen Anwendungen liegt bei ca. 4 bis 12, die Dosierung des beträgt 0,1 bis 2000 ppm, vorzugsweise 0,5 bis 500 ppm und besonders bevorzugt von 2 bis 100 ppm, bezogen auf das wasserführende System. Die Temperaturen sind je nach Klimabedingungen und Verfahrensparametem unterschiedlich und können bis ca. 100°C betragen.

In Wasch- und Reinigungsmitteln werden die erfindungsgemäßen Copolymere vorteilhaft innerhalb des Builder/Cobuilder-Systems eingesetzt.

Im Bereich der Textilindustrie werden die erfindungsgemäßen Copolymere bei der Vorbehandlung von Textilien, der Bleiche, der Färbung, der Nachwäsche und Ausrüstung und als Schlichte verwendet.

In der Lederindustrie lassen sich die erfindungsgemäßen Copolymere sowohl bei der Behandlung der rohen Tierhäute als auch bei der Gerbung und der Nachgerbung der Leder einsetzen. Bei der Gerbung der Leder bewirken die Copolymeren eine Steigerung der Chromaufnahme durch das Leder, in der Nachgerbung wirken sie vorteilhaft auf die Färbung, Fülle und Narbenfestigkeit.

Für bestimmte Anwendungen hat es sich als vorteilhaft erwiesen, den erfindungsgemäßen Copolymerlösungen weitere Mengen an Terpenen, vorzugsweise in Form einer Öl-in-Wasser-Emulsion zuzusetzen.

Die Erfindung wird durch die nachfolgenden Beispiele erläutert:

### Testmethoden:

### 1. Prüfung der Dynamischen Scale Inhibierung

Die Messung wird mit einem sogenannten P.M.A.C (Pressure Measurement and Control Unit) durchgeführt.

Ein konstanter Volumenstrom von 2 [l/h] einer stöchiometrischen Mischung einer Lösung von Calciumchlorid-dihydrat bzw. Natriumhydrogencarbonat in VE-Wasser (berechnete Calciumhärte: 30 °dH) wird durch eine in einem Heizbad von 90 [°C] befindliche spiralförmige Metallkapillare (Länge: 1 [m], Innendurchmesser: 1,1 [mm]) geleitet. Beide Lösungen werden erst direkt vor der Kapillare zusammengeführt. Das Antibelagmittel wird dabei vor Beginn des Versuches der Natriumhydrogencarbonatlösung zugesetzt.

Begonnen wird die Versuchsreihe mit einer Dosierung von 4,5 ppm Antibelagmittel (bezogen auf Trockensubstanz). Die Versuchszeit beträgt eine Stunde. Sobald sich Beläge an den Innenwänden der Metallkapillare bilden, nimmt ihr Innendurchmesser ab. Da die Pumpen aber einen konstanten Volumenstrom fördern, steigt der Druck vor der Metallkapillare an. Die Änderung des Druckes wird fortlaufend gemessen und mittels Schreiber aufgezeichnet. Hat sich nach der Versuchszeit keine Belagsbildung eingestellt, so wird ein weiterer Versuch mit einer reduzierten Dosierung durchgeführt. Ziel ist die Ermittlung der Dosierung bei der eine Belagsbildung erreicht wird. Die Versuche dienen dem Produktvergleich, d.h. die Versuche der zu vergleichenden Produkte müssen mit der gleichen Kapillare durchgeführt werden. Für die Versuchsreihe mit einem oder mehreren Produkten wird ein sogenanntes Standardprodukt ausgewählt, auf die die Ergebnisse der Versuchsreihe bezogen werden. Dazu werden Versuche mit diesem Standardprodukt mit den in Frage kommenden Dosierungen durchgeführt.

Der zum Vergleich herangezogene Scaling - Quotient berechnet sich nach: Druck des Produkfirersuches nach 40 Minuten dividiert durch Druck des Standardversuches nach 40 Minuten. Selbstverständlich müssen beide Versuche mit der gleichen Dosierung durchgeführt sein.

### 2. Bestimmung des relativen Dispergiervermögen gegenüber Kaolin (DVK)

Die Prüfmethode dient der Bestimmung des Dispergiervermögens von Polyelektrolyten gegenüber Schmutzteilchen in Kühlwasserkreisläufen.
Durchführung: In einem Becherglas werden 1,170 g Kaolin (10.000 ppm) eingewogen und mittels Pipette 116 ml entionisiertes Wasser zugegeben. Anschließend wird mit einem Magnetrührer bei ca. 600 U/min 10 Minuten lang dispergiert. Dabei wird der pH-Wert mit 4%iger NaOH auf 8,5 eingestellt. Bei laufendem Magnetrührer werden 19 ml mit einer Pipette entnommen und bis zur Höhe von 13 cm in ein Reagenzglas gefüllt. Anschließend wird sofort mit einer 2-ml-Spritze mit Kanüle ca. 1,5 ml der Dispersion entnommen. Dabei ist die Spitze der Kanüle ca. 9 bis 10 cm vom oberen Reagenzglasrand, d.h. ca. 6 bis 7 cm vom oberen Flüssigkeitsrand einzutauchen. Von der entnommenen Probe wird sofort 1,000g in ein Becherglas eingewogen und mit entionisiertem Wasser verdünnt. Die Extinktion dieser Probe wird gemessen (Nullprobe, Dispersion ohne Dispergator zur Standzeit 0). Die restliche Dispersion erhält einen Dispergatorzusatz von 20 ppm Trockensubstanz.
Man lässt die Proben 5 Stunden stehen und entnimmt dann wie oben schon beschrieben je eine Probe von ca. 1,5 ml und verdünnt in der gleichen Weise. Auch von diesen Proben wird sofort die Extinktion bei 450 nm gemessen (Probenwert).

Auswertung: Das relative Dispergiervermögen nach einer Standzeit von 5 Stunden ergibt sich durch Vergleich mit der Nullprobe, welche gleich 100% gesetzt wird. Die Probenwerte betragen dann x%.

### 3. Apparatur zur Testung auf organische Beläge

### Durchflusszelle:

Die Messung der Wirksamkeit der Vermeidung von organischen Belägen erfolgt mit einer Durchflusszelle anhand der Auswertung der Ablagerungen, die auf einem Stahl-Prüfkörper entstehen und soll die Verhältnisse in einer Anlage zur Herstellung von Papier repräsentieren:
Der Aufbau besteht aus einem 250 ml Erlenmeyer Becherglas, das auf einem Schüttelapparat (Bezeichnung GFL 3031) mit 160 Umdrehungen pro Minute bewegt wird. Das Becherglas wird mit der wässrigen Lösung befüllt und bei 45°C temperiert. In das Becherglas ragen die beiden Enden eines Siliconschlauches (4 x 7 mm). Mittels einer Pumpe (Watson Marlow 313 S) wird im Schlauch ein Volumenstrom von 80 Milliliter pro Minute eingestellt. Das gesamte im Kreislauf befindliche Volumen beträgt 50 ml. In der Mitte des Schlauches befindet sich ein Silicon-Schlauchteil von 10 x 15 mm in der ein Prüfling (15 mm im Durchmesser und 2mm Dicke, aus rostfreiem Stahl, HAST AISI 316L) eingebracht ist.
Während des Versuches wird das gesamte System bei einer Temperatur von 45°C gehalten. Vor jedem neuen Versuch werden die Systemkomponenten gründlich gereinigt. Es kommt das in der jeweiligen Papieranlage vorherrschende Wasser zu Anwendung. Zunächst werden 200 ppm der in den Beispielen bzw. Versuchsbeispielen beschriebenen Polymerisate dem Wasser (Fabrik Stora Enso Inkeroinen, entnommen am 10.01.2002, Nahrungsmittelverpackungen und graphic board, teilweise gecoated, 30 % reject and 70 % TMP, pH des Wassers 6,5; Prozesstemperatur 50 bis 55°C) zugefügt und für 20 Stunden unter Durchfluss in der Durchflusszelle belassen. Nach einer weiteren Zugabe von 200 ppm wird eine weitere Stunde in der Durchflusszelle belassen. Anschließend werden die Prüflinge unter einem Raster-ElektronenMikroskop und/oder einem Epifluoreszenzmikroskop betrachtet und jeweils gegeneinander auf Anzahl, Größe und Gestalt der Ablagerungen verglichen. Es erfolgt eine Aufstellung derart, dass die sauberste Probe mit 1, die nächst saubere mit 2 usw. bezeichnet wird.
Hierbei ist zu beachten, dass in einer Vergleichsversuchsreihe dasselbe Wasser zur gleichen Zeit und unter gleichen Bedingungen untersucht wird.

### 4. Bestimmung der Dispergierwirkung von Dispergatoren in Pigment-Sturries

Diese Methode dient der Bestimmung der erforderlichen Dispergiermittelmenge für eine Pigmentslurry von vorgegebenem Pigmentgehalt (ca. 30 bis 80%) und pH-Wert.

In ein 600-ml-Becherglas werden 166 g deionisiertes Wasser mit der gewünschten Menge an Dispergierhilfsmittel und NaOH zur pH-Einstellung gegeben. Unter Rühren bei 4000 min ⁻¹ werden 434 g Pigment portionsweise eingestreut. Nach Eintragen der Gesamtmenge an Pigment wird 15 min lang bei einer Drehzahl von 5000 min ⁻¹ weitergerührt. Es stellt sich ein Feststoffgehalt von ca. 73% in der Slurry ein. Nach der Rührzeit von 15 min wird die Probe auf Feststoffgehalt mit dem Infrarottrockner geprüft und danach die Probe auf 25°C temperiert. Anschließend erfolgt die Viskositätsmessung der Slurry mit einem Brookfield-Viskosimeter bei 100 min⁻¹. Es empfiehlt sich, diesen Test mit ca. 4 verschiedenen Dispergiermittelkonzentrationen durchzuführen, um die optimale Dosierung zu bestimmen.
Eine Probe der Dispersion wird mit deionisiertem Wasser 1:9 verdünnt und der pH-Wert gemessen.

### 5. Bestimmung der Eignung eines Mahl-/Dispergierhilfsmittels zur Herstellung von Pigmentslurries

Als Prüfgerät dient die Laborperlmühle "Dyno-Mill KDL-Spezial".
Man dispergiert eine Mischung aus 638 g deionisiertem Wasser mit der gewünschten Menge an Mahl-/Dispergiermittel und NaOH zur pH-Einstellung mit einem Labordissolver vor. Der resultierende Feststoffgehalt der Slurry liegt hier bei etwa 75 Gew.%.
Danach wird das Produkt in die Laborperlmühle überführt und die Mühle und Pumpe gestartet. Man registriert die Scheibengeschwindigkeit in m/s und die Mahldauer. Nach dem Ablauf der gewählten Zeit wird die Slurry auf 20°C temperiert, in den Dissolver überführt und 2 min bei 1000 min ⁻¹ gerührt. Danach erfolgen Viskositätsmessung mit dem Brookfield-Vikosimeter und Messung des pH-Wertes in 10%iger Verdünnung.

Am Schluss wird die Teilchengrößenverteilung mit einer Sedimentationswaage (Sedigraph) bestimmt.

### Beschreibung der Versuche:

### Vergleichsbeispiel 1

70 g Orangenterpen, 5,0 g Hexadecanol, 30 g eines 75%igen Paraffinsulfonats, 7 g eines mit 20 Mol Ethylenoxid umgesetzten Oleylalkohols und 5 g eines mit 3 Mol Ethylenoxid umgesetzten Laurylalkohols werden homogen aufgeschmolzen und anschließend unter Rühren auf 85°C erwärmt. In diese Lösung werden 383 g einer 27%igen wässrigen Lösung einer Homopolyacrylsäure (Mw 2500) langsam eingegossen. Bezogen auf die eingesetzte Menge des Terpens lassen sich mittels Head-Space-GC 90% freies Terpen im Produkt nachweisen.

### Vergleichsbeispiel 2

70 g Orangenterpen, 5,0 g Hexadecanol, 30 g eines 75%igen Paraffinsulfonats, 7 g eines mit 20 Mol Ethylenoxid umgesetzten Oleylalkohols und 5 g eines mit 3 Mol Ethylenoxid umgesetzten Laurylalkohols werden homogen aufgeschmolzen und anschließend unter Rühren auf 85°C erwärmt. In diese Lösung werden 383 g vollentsalztes Wasser eingegossen. Die so erhaltene. Emulsion wird mit 348,84 g einer 30%igen wässrigen Lösung einer Homopolyacrylsäure (Mw 2500) bei Raumtemperatur gut durchmischt. Bezogen auf die eingesetzte Menge des Terpens lassen sich mittels Head-Space-GC 90% freies Terpen im Produkt nachweisen.

### Beispiel 1

In einem Polymerisationskolben(mit Rührer, Gaseinleitungsrohr und Rückflußkühler) werden 73,55 g Wasser, 150,0 g Acrylsäure (AcS) und 225 g einer Orangenterpen-in-Wasser-Emulsion nach WO 95/15296 (Terpen - Emulsion B) vorgelegt, eine Stunde Stickstoff durchgeleitet, mit 5,7 g Natriumperoxidisulfat gelöst in 10g Wasser, 10 g Wasserstoffperoxid (35%ig) und 20 g Mercaptoethanol gestartet.
Innerhalb 7 Minuten steigt die Temperatur von 20°C auf 92°C. Ab der Maximaltemperatur wird bei 92°C Innentemperatur weitergerührt .
Nach 20 Minuten wird 0,75 g Azobis(2-Amidinopropan)dihydrochlorid (gelöst in 5 g Wasser) zugesetzt und 3 Stunden unter Rückfluss belassen. Mit 50%iger Natronlauge wird ein pH-Wert von 2,5 eingestellt. Man erhält eine klare Lösung. Bezogen auf die eingesetzten Menge des Terpens lassen sich mittels Head-Space-GC weniger als 40% freies Terpen im Produkt nachweisen d.h. mehr als 60% des eingesetzten Terpens sind copolymerisiert.

### Vergleichsbeispiel 3: analog Terpen - Emulsion B aus WO 95/15296

### Vergleichsbeispiel 4

Hier wird in Anlehnung an Beispiel 15 aus der US 5,756,624 gearbeitet.
4a) Das Gewichtsverhältnis der Monomere im resultierenden Polymer (Maleinsäureanhydrid/Orangenterpen) beträgt 70%/30%
4b) Das Gewichtsverhältnis der Monomere im resultierenden Polymer (Maleinsäureanhydrid/Orangenterpen) beträgt 80%/20%

In beiden Fällen wird eine feste braune Paste erhalten, die in Wasser unlöslich ist. Diese Paste kann jedoch in wässriger Natronlauge teilweise gelöst bzw. dispergiert werden. Es wurden 20%ige wässrige Dispersionen des Polymers eingesetzt.

### Vergleichsbeispiel 5: Homopolyacrylsäure mit einem mittleren Molekulargewicht von Mw 2500.

### Beispiel 2:

In einem Polymerisationskolben (mit Rührer, Gaseinleitungsrohr und Rückflußkühler) werden 415,6 g Wasser, 188,8 g Acrylsäure, 47,2 g Natriummethallylsulfonat und 11,8 g einer Terpen-in-Wasser-Emulsion nach WO 95/15296 (Terpen - Emulsion B) vorgelegt, eine Stunde Stickstoff durchgeleitet, mit 8 g Natriumperoxidisulfat, 15 g Wasserstoffperoxid (35%ig) und 20 g Mercaptoethanol gestartet.
Innerhalb 10 Minuten steigt die Temperatur von 25°C auf 84°C. Ab der Maximaltemperatur wird bei 90°C Innentemperatur weitergerührt .
Nach 20 Minuten wird 1 g Azobis(2-Amidinopropan)dihydrochlorid (gelöst in 5 g Wasser) zugesetzt und 2 Stunden gerührt. Anschließend werden 15 g Wasserstoffperoxid (35%ig) zugefügt und 3 Stunden unter Rückfluss belassen. Man erhält eine klare Lösung. Mittels Head-Space-GC sind im Produkt nur noch 2 ppm freies Terpen nachweisbar. Der restliche Anteil ist copolymerisiert.

### Beispiel 3:

Wie unter Beispiel 2. An Stelle der Terpen-in-Wasser-Emulsion wurden 1,7 g Orangenterpen eingesetzt.
Man erhält eine klare Lösung.

### Vergleichsbeispiel 6

Copolymer aus Acrylsäure und 20 Gew.% Natriummethallylsulfonat (NaMAS), mittleres Molekulargewicht Mw 1900.

### Vergleichsbeispiel 7

Wie unter-Vergleichsbeispiel 2. Jedoch wurde anstelle einer Homopolyacrylsäure das Produkt unter Vergleichsbeispiel 6 eingesetzt.

### Vergleichsbeispiel 8

Wie unter Vergleichsbeispiel. Jedoch wurde anstelle einer Homopolyacrylsäure das Produkt unter Vergleichsbeispiel 6 eingesetzt.

**Tabelle 1a:**

| **Beispiel [B] / Vergleich [VB]** | **VB1** | **VB2** | **B1** | **VB3** |
|---|---|---|---|---|
| **analog Patent** | EP 892838B1 bzw. WO 96/14092 | EP 892838B1 bzw. WO 96/14092 | | WO 95/15296 |
| **Molekulargew. GPC (Mw)** | 2500 | 2500 | 2500 | |
| **Monomer** | AcS | AcS | AcS | |
| **Orangenterpenanteil an der Formulierung [%]** | 14 | 6 | 6 | 14 |
| **P-Mac Standard Scaling - Quotient** | 4,8 | 1,5 | 1,2 | < 40 Min. |
| **DVK [%]** | 73 | 78 | 83 | 30 |
| **Organic Deposit** | 2 | 4 | 1 | 3 |
| **Bemerkung** | Phasentrennung | Phasentrennung | Klare Lösung | Emulsion |
| **wasserlöslich** | Ja | Ja | Ja | Nein |

**Tabelle 1b:**

| **Beispiel [B] / Vergleich [VB]** | **VB4a** | **VB4b** | **VB5** |
|---|---|---|---|
| **analog Patent** | US 5756624 | US 5756624 | |
| **Molekulargew. GPC.(Mw)** | Nicht bestimmt | nicht bestimmt | 2500 |
| **Monomer** | **MSA/Terpen** | **MSA/Terpen** | **AcS** |
| **Orangenterpenanteil an der Formulierung [%]** | 6 | 4 | 0 |
| **P-Mac Standard Scaling - Quotient** | < 40 Min. | < 40 Min. | 1,0 |
| **DVK [%]** | **32** | **37** | **82** |
| **Organic Deposit** | | | |
| **Bemerkung** | Braune Dispersion in wässriger NaOH | Braune Dispersion in wässriger NaOH | Klare Lösung |
| **wasserlöslich** | Teilweise | Teilweise | Ja |

**Tabelle 2a:**

| **Beispiel [B] / Vergleich [VB]** | **VB6** | **VB7** | **VB8** |
|---|---|---|---|
| **analog Patent** | EP 818423A1, US 4455235 | Analog EP 892838B1 oder WO 96/14092 | Analog EP 892838B1 oder WO 96/14092 |
| **Molekulargew. GPC (Mw)** | 1900 | 1900 | 1900 |
| **Monomer** | AcS/NaMAS | AcS/NaMAS | AcS/NaMAS |
| **Orangenterpenanteil an der Formulierung [%]** | 0 | 0,3 | 0,3 |
| **P-Mac Standard Scaling - Quotient** | 1,0 | 1,2 | 1,3 |
| **DVK [%]** | 87 | 85 | 85 |
| **Bemerkung** | Klare Lösung | Trübe Lösung | Trübe Lösung |

**Tabelle 2b:**

| **Beispiel [B] / Vergleich [VB]** | **B2** | **B3** |
|---|---|---|
| **Molekulargew. GPC (Mw)** | 1900 | 1900 |
| **Monomer** | AcS/NaMAS | AcS/NaMAS |
| **Orangenterpenanteil an der Formulierung [%]** | 0,3 | 0,3 |
| **P-Mac Standard Scaling - Quotient** | 0,9 | 0,5 |
| **DVK [%]** | 86 | 85 |
| **Bemerkung** | Klare Lösung | Klare Lösung |

### Ergebnisse der Dispergierversuche mit CaCO₃

Die folgende Tabelle 3 enthält Ergebnisse zur Wirksamkeit als Dispergiermittel mit den Polymeren aus den Beispielen 1 und 2 sowie dem Vergleichsbeispiel 1.

**Tabelle 3:**

| **Produkt** | **Dosierung/ % atro/atro** | **Viskosität / mPa*s bei 100 U/min** | **CaCO**_{**3**} **%** | **pH-Wert** |
|---|---|---|---|---|
| VB1 | 0,08 | 630 | 81 | 9,9 |
| B1 | 0,08 | 289 | 81 | 9,9 |
| B2 | 0,08 | 481 | 81 | 9,7 |

Die erfindungsgemäßen Beispiele mit dem Gehalt an Orangenterpen zeigen deutlich bessere Dispergierleistungen als das Vergleichsbeispiel. Eine niedrigere Viskosität weist im Allgemeinen deutlich auf eine bessere Dispergierung der Teilchen.

### Ergebnisse der Mahl-/Dispergierversuche mit CaCO3

Die folgende Tabelle 4 zeigt die Wirksamkeit der erfindungsgemäßen Polymere als Mahlhilfsmittel

**Tabelle 4**

| **Produkt** | **Dosierung % atro/atro** | **Vlsk. / mPa s bei 100 U/min** | **CaCO**_{**3**} **%** | **pH-Wert** | **Teilchen % < 2 µm** | **Teilchen % <1 µm** |
|---|---|---|---|---|---|---|
| VB6 | 0,8 | 1850 | 76 | 9,9 | 93,5 | 71,6 |
| B1 | 0,8 | 1220 | 76 | 9,8 | 91,3 | 70,1 |
| B2 | 0,8 | 950 | 76 | 9,7 | 91,6 | 70,4 |

Die erfindungsgemäßen Polymerisate zeigen ein sehr gutes Verhalten bei der Verwendung als Mahlhilfsmittel. Der Vergleich mit einem üblichen Mahlhilfsmittelpolymer ergibt deutlich niedrigere Viskositäten der Pigmentaufschlämmungen für die erfindungsgemäßen Copolymere.

## Patentansprüche

1. Wasserlösliche Copolymerisate aus
a) monoethylenisch ungesättigten, säuregruppentragenden Monomeren und
b) mindestens einer der folgenden, eine ungesättigte Doppelbindung enthaltenden copolymerisierbaren hydrophoben Komponenten
b1) ein acyclisches, monocyclisches und/oder bicyclisches Terpen,
b2) ein ungesättigter, offenkettiger oder zyklischer, normaler oder isomerer Kohlenwasserstoff mit 8 bis 30 Kohlenstoffatomen
b3) ein ungesättigter Fettalkohol mit jeweils 8 bis 30 Kohlenstoffatomen und ggf.
c) bis zu 40 Gew.% säuregruppenfrei, wasserlösliche monomere,
**dadurch gekennzeichnet, dass** die Copolymerisate durch radikalische Copolymerisation der Komponenten a), b) und ggf. c) in wässriger Phase gebildet werden.

2. Copolymerisate nach Anspruch 1, **dadurch gekennzeichnet, dass** die monoethylenisch ungesättigten, säuregruppentragenden Monomeren aus monoethylenisch ungesättigten Monocarbonsäuren bestehen.

3. Copolymerisate nach Anspruch 1 und 2, **dadurch gekennzeichnet, dass** die säuregruppentragenden Monomere aus der Gruppe Acrylsäure, Methacrylsäure und/oder Vinylessigsäure, ausgewählt sind.

4. Copolymerisate nach Anspruch 1 bis 3, **dadurch gekennzeichnet, dass** die monoethylenisch ungesättigten, säuregruppentragenden Monomeren aus monoethylenisch ungesättigten Monocarbonsäuren und monoethylenisch ungesättigten Sulfonsäuren bestehen.

5. Copolymerisate nach Anspruch 1 bis 4, **dadurch gekennzeichnet, dass** die Säuregruppen der Monomeren zu 1 bis 75 % neutralisiert sind.

6. Copolymerisate nach Anspruch 1 bis 5, **dadurch gekennzeichnet, dass** die Säuregruppen der Monomeren zu 5 bis 30 % neutralisiert sind.

7. Copolymerisate nach Anspruch 1 bis 6, **dadurch gekennzeichnet, dass** die copolymerisierbare Komponente ein acyclisches Terpen und/oder ein monocyclischer und/oder bicyclischer Terpenkohlenwasserstoff ist.

8. Copolymerisate nach Anspruch 1 bis 7, **dadurch gekennzeichnet, dass** der Anteil der Komponente b) 0,001 bis 50 Gew.% beträgt.

9. Copolymerisate nach Anspruch 8, **dadurch gekennzeichnet, dass** der Anteil der Komponente b) 0,01 bis 30 Gew.% beträgt.

10. Copolymerisate nach Anspruch 1 bis 9, **dadurch gekennzeichnet, dass** bis zu 40 Gew.% säuregruppenfreie, wasserlösliche Monomere c) enthalten sind.

11. Copolymerisate nach Anspruch 1 bis 10, **dadurch gekennzeichnet, dass** sie ein gewichtsmittleres Molekulargewicht von kleiner oder gleich 500.000 g/mol aufweisen.

12. Copolymerisate nach Anspruch 11, **dadurch gekennzeichnet, dass** sie ein gewichtsmittleres Molekulargewicht zwischen 1.000 und 10.000 g/mol aufweisen.

13. Verfahren zur Herstellung eines wasserlöslichen Copolymeren gemäß Anspruch 1 bis 12, **dadurch gekennzeichnet, dass** die Copolymerisate durch radikalische Polymerisation der Monomerkomponenten in wässriger Phase gebildet werden.

14. Verfahren nach Anspruch 13, **dadurch gekennzeichnet, dass** die Konzentration der copolymerisierbaren Bestandteile im wäßrigen Polymerisationsansatz 10 bis 70 Gew.% beträgt.

15. Verfahren nach Anspruch 13 oder 14, **dadurch gekennzeichnet, dass** die Komponente b) in Form einer Öl-in-Wasser-Emulsion, die aus einer hydrophoben Phase (Ölphase), mindestens einem Emulgator und Wasser gebildet wird, eingesetzt wird.

16. Verfahren nach Anspruch 13 bis 15, **dadurch gekennzeichnet, dass** die radikalische Polymerisation in Gegenwart von Molekulargewichtsreglern durchgeführt wird.

17. Verwendung der Copolymerisate nach Anspruch 1 bis 12 zur Verhinderung von organischen, anorganischen und gemischt organisch/anorganischen Ablagerungen in wasserführenden Systemen.

18. Verwendung der Copolymerisate nach Anspruch 17 in Brauch- oder Abwassersystemen, in Kühlkreisläufen, in Meerwasserentsatzungsanlagen, Umkehrosmoseanlagen und zur Aufarbeitung von Brackwasser und bei der Zuckergewinnung aus Zuckerrüben, insbesondere zur Behandlung wässriger Suspensionen mit geschnitzelten Zuckerrüben.

19. Verwendung der Copolymerisate nach Anspruch 18 bei der Zuckergewinnung aus Zuckerrüben zur Behandlung wässriger Suspensionen mit geschnitzelten Zuckerrüben.

20. Verwendung der Copolymerisate nach Anspruch 17 bis 19, **dadurch gekennzeichnet, dass** die Copolymerisate dem wasserführenden System in einer Menge von 0,1 bis 5000 ppm zugesetzt werden.

21. Verwendung der Copolymerisate nach Anspruch 20, **dadurch gekennzeichnet, dass** die Copolymerisate dem wasserführenden System in einer Menge von 1 bis 100 ppm zugesetzt werden.

22. Verwendung der Copolymerisate nach Anspruch 1 bis 12 als Hilfsmittel bei der Mahlung und Dispergierung von Pigmenten.

23. Verwendung der Copolymerisate nach Anspruch 1 bis 12 als Hilfsmittel in Reinigungs- und Waschmittelformulierungen sowie in Textil - und Lederbehandlungsprozessen.

## Claims

1. Water-soluble copolymers prepared from
a) monoethylenically unsaturated monomers bearing acid groups and
b) at least one of the following copolymerisable hydrophobic components containing an unsaturated double bond
b1) an acyclic, monocyclic and/or bicyclic terpene,
b2) an unsaturated, open-chain or cyclic, normal or isomeric hydrocarbon with 8 to 30 carbon atoms
b3) an unsaturated fatty alcohol or an unsaturated fatty acid with in each case 8 to 30 carbon atoms and optionally
c) up to 40 wt.% of water-soluble monomers containing no acid groups
**characterised in that** the copolymers are formed by free-radical copolymerisation of components a), b) and optionally c) in the aqueous phase.

2. Copolymers according to claim 1, **characterised in that** the monoethylenically unsaturated monomers bearing acid groups consist of monoethylenically unsaturated monocarboxylic acids.

3. Copolymers according to claim 1 and claim 2,
**characterised in that** the monomers bearing acid groups are selected from the group of acrylic acid, methacrylic acid and/or vinylacetic acid.

4. Copolymers according to claims 1 to 3, **characterised in that** the monoethylenically unsaturated monomers bearing acid groups consist of monoethylenically unsaturated monocarboxylic acids and monoethylenically unsaturated sulfonic acids.

5. Copolymers according to claims 1 to 4, **characterised in that** the acid groups of the monomers are 1 to 75% neutralised.

6. Copolymers according to claims 1 to 5, **characterised in that** the acid groups of the monomers are 5 to 30% neutralised.

7. Copolymers according to claims 1 to 6, **characterised in that** the copolymerisable component is an acyclic terpene and/or a monocyclic and/or bicyclic terpene hydrocarbon.

8. Copolymers according to claims 1 to 7, **characterised in that** the proportion of component b) amounts to 0.001 to 50 wt.%.

9. Copolymers according to claim 8, **characterised in that** the proportion of component b) amounts to 0.01 to 30 wt.%.

10. Copolymers according to claims 1 to 9, **characterised in that** up to 40 wt.% of water-soluble monomers c) containing no acid groups are present.

11. Copolymers according to claims 1 to 10, **characterised in that** they have a weight-average molecular weight of less than or equal to 500,000 g/mol.

12. Copolymers according to claim 11, **characterised in that** they have a weight-average molecular weight of between 1,000 and 10,000 g/mol.

13. A process for the production of a water-soluble copolymer according to claims 1 to 12, **characterised in that** the copolymers are formed by free-radical polymerisation of the monomer components in the aqueous phase.

14. A process according to claim 13, **characterised in that** the concentration of the copolymerisable constituents in the aqueous polymerisation batch amounts to 10 to 70 wt.%.

15. A process according to claim 13 or claim 14,
**characterised in that** component b) is used in the form of an oil-in-water emulsion which is formed from a hydrophobic phase (oil phase), at least one emulsifier and water.

16. A process according to claims 13 to 15, **characterised in that** the free-radical polymerisation is performed in the presence of chain-transfer agents.

17. Use of the copolymers according to claims 1 to 12 for preventing organic, inorganic and mixed organic/inorganic deposits in water-conveying systems.

18. Use of the copolymers according to claim 17 in plant water systems or waste water systems, in cooling circuits, in seawater desalination installations, reverse osmosis installations and for working up brackish water and in isolating sugar from sugar beet, in particular for treating aqueous suspensions comprising chopped sugar beet.

19. Use of the copolymers according to claim 18 in isolating sugar from sugar beet for treating aqueous suspensions comprising chopped sugar beet.

20. Use of the copolymers according to claims 17 to 19, **characterised in that** the copolymers are added to the water-conveying system in a quantity of 0.1 to 5000 ppm.

21. Use of the copolymers according to claim 20,
**characterised in that** the copolymers are added to the water-conveying system in a quantity of 1 to 100 ppm.

22. Use of the copolymers according to claims 1 to 12 as an auxiliary in the grinding and dispersion of pigments.

23. Use of the copolymers according to claims 1 to 12 as an auxiliary in cleaning agent and detergent formulations and in textile and leather treatment processes.

## Revendications

1. Copolymères solubles dans l'eau, constitués par
a) des monomères monoéthyléniquement insaturés, portant des groupes acides et
b) au moins un des composants copolymérisables, hydrophobes suivants, contenant une double liaison insaturée
b1) un terpène acyclique, monocyclique et/ou bicyclique,
b2) un hydrocarbure insaturé, à chaîne ouverte ou cyclique, normal ou isomère, comprenant 8 à 30 atomes de carbone
b3) un alcool gras insaturé, comprenant à chaque fois 8 à 30 atomes de carbone et le cas échéant
c) jusqu'à 40% en poids de monomères solubles dans l'eau, exempts de groupes acides, **caractérisés en ce que** les copolymères sont formés par copolymérisation radicalaire des composants a), b) et le cas échéant c) en phase aqueuse.

2. Copolymères selon la revendication 1, **caractérisés en ce que** les monomères monoéthyléniquement insaturés, portant des groupes acides sont constitués par des acides monocarboxyliques, monoéthyléniquement insaturés.

3. Copolymères selon la revendication 1 et 2, **caractérisés en ce que** les monomères portant des groupes acides sont choisis dans le groupe formé par l'acide acrylique, l'acide méthacrylique et/ou l'acide vinylacétique.

4. Copolymères selon la revendication 1 à 3, **caractérisés en ce que** les monomères monoéthyléniquement insaturés, portant des groupes acides sont constitués par des acides monocarboxyliques monoéthyléniquement insaturés et des acides sulfoniques monoéthyléniquement insaturés.

5. Copolymères selon la revendication 1 à 4, **caractérisés en ce que** les groupes acides des monomères sont neutralisés à raison de 1 à 75%.

6. Copolymères selon la revendication 1 à 5, **caractérisés en ce que** les groupes acides des monomères sont neutralisés à raison de 5 à 30%.

7. Copolymères selon la revendication 1 à 6, **caractérisés en ce que** le composant copolymérisable est un terpène acyclique et/ou un hydrocarbure terpénique monocyclique et/ou bicyclique.

8. Copolymères selon la revendication 1 à 7, **caractérisés en ce que** la proportion de composant b) est de 0,001 à 50% en poids.

9. Copolymères selon la revendication 8, **caractérisés en ce que** la proportion de composant b) est de 0,01 à 30% en poids.

10. Copolymères selon la revendication 1 à 9, **caractérisés en ce qu'**ils contiennent jusqu'à 40% en poids de monomères c) solubles dans l'eau, exempts de groupes acides.

11. Copolymères selon la revendication 1 à 10, **caractérisés en ce qu'**ils présentent un poids moléculaire pondéral moyen inférieur ou égal à 500 000 g/mole.

12. Copolymères selon la revendication 11, **caractérisés en ce qu'**ils présentent un poids moléculaire pondéral moyen entre 1 000 et 10 000 g/mole.

13. Procédé pour la préparation d'un copolymère soluble dans l'eau selon la revendication 1 à 12, **caractérisé en ce que** les copolymères sont formés par polymérisation radicalaire des composants monomères en phase aqueuse.

14. Procédé selon la revendication 13, **caractérisé en ce que** la concentration des constituants copolymérisables dans la charge aqueuse de polymérisation est de 10 à 70% en poids.

15. Procédé selon la revendication 13 ou 14, **caractérisé en ce que** le composant b) est utilisé sous forme d'une émulsion huile-dans-eau qui est constituée par une phase hydrophobe (phase huileuse), au moins un émulsifiant et de l'eau.

16. Procédé selon la revendication 13 à 15, **caractérisé en ce que** la polymérisation radicalaire est réalisée en présence de régulateurs du poids moléculaire.

17. Utilisation des copolymères selon la revendication 1 à 12 pour éviter des dépôts organiques, inorganiques et organiques/inorganiques mixtes dans des systèmes de conduites d'eau.

18. Utilisation des copolymères selon la revendication 17 dans des systèmes d'eaux industrielles ou usées, dans des circuits de refroidissement, dans des installations de dessalement d'eau de mer, dans des installations d'osmose inverse et pour le traitement des eaux saumâtres et lors de la production de sucre à partir de betteraves sucrières, en particulier pour le traitement de suspensions aqueuses avec des betteraves sucrières en pulpe.

19. Utilisation des copolymères selon la revendication 18 lors de la production de sucre à partir de betteraves sucrières pour le traitement de suspensions aqueuses avec des betteraves sucrières en pulpe.

20. Utilisation des copolymères selon la revendication 17 à 19, **caractérisée en ce que** les copolymères sont ajoutés au système de conduites d'eau en une quantité de 0,1 à 5 000 ppm.

21. Utilisation des copolymères selon la revendication 20, **caractérisée en ce que** les copolymères sont ajoutés au système de conduites d'eau en une quantité de 1 à 100 ppm.

22. Utilisation des copolymères selon la revendication 1 à 12 comme adjuvant lors du broyage et de la dispersion de pigments.

23. Utilisation des copolymères selon la revendication 1 à 12 comme adjuvant dans des formulations d'agents de nettoyage et de lavage ainsi que dans des processus de traitement du textile et du cuir.
